# EUROPEAN PATENT APPLICATION

(11) **EP 1 878 735 A1**
(43) Date of publication of application: **16.01.2008**
(21) Application number: 07012673.5
(22) Date of filing: 28.06.2007
(51) Int. Cl.: C07F 5/02, C07F 3/02

(54) **Process for the preparation of boronic acids and derivatives thereof**

(30) Priority: 13.07.2006 IT MI20061365
(71) Applicant: Dipharma Francis S.r.l., 20021 Baranzate (MI) (IT)
(72) Inventor: Bologna, Alberto, 27018 Vidigulfo (PV) (IT); Barreca, Giuseppe, 23874 Montevecchia (LC) (IT); Allegrini, Pietro, 20097 San Donato Milanese (MI) (IT)
(74) Representative: Minoja, Fabrizio

(57) **Abstract**

A process for the preparation of a 4,4-dimethyl-2-phenyl-oxazoline boronic derivative (VII) by metallation of 4,4-dimethyl-2-phenyl-oxazoline with a Grignard reagent and its use in the preparation of 2-carboxybenzene-boronic acid, or a salt thereof, and recovery of the latter.

## Description

### FIELD OF THE INVENTION

The present invention relates to an alternative process for the preparation of 2-carboxyphenyl-boronic acid, or a salt thereof, useful as a synthesis intermediate.

### TECHNOLOGICAL BACKGROUND

2-Carboxyphenyl-boronic acid is an intermediate particularly useful in coupling reactions to obtain carboxy substituted diphenyl compounds. Synthesis 2002, 1043-1046 describes the synthesis of said acid by oxidation of 2-tolylboronic acid with potassium permanganate. This process, however, has not proved efficient on an industrial scale, nor large amounts of said acid can be isolated from the reaction mixtures for transport and/or storing in case of subsequent use in coupling reactions. There is therefore a need for an alternative method for the preparation of 2-carboxyphenyl-boronic acid in large amounts.

### SUMMARY OF THE INVENTION

A process has now been found for the preparation and recovery of 2-carboxyphenyl-boronic acid, which comprises the metallation of 4,4-dimethyl-2-phenyl-oxazoline of formula (III), to obtain a compound of formula (I); the conversion of a compound of formula (I) to the corresponding boronic derivative of formula (VII); the conversion of compound (VII) to 2-carboxyphenyl-boronic acid of formula (V) or a salt thereof and its recovery.

The polymorphic forms of 2-carboxyphenyl-boronic acid sodium salt were characterized with the known XRPD technique (X-ray powder diffraction).

X-ray diffraction spectra (XRPD) were recorded with an APD 2000 θ/θ automatic diffractometer for powders and liquids (Ital-Structures), under the following operative conditions: CuKα radiation (λ = 1.5418 A), scanning 3-40°, with angular step of 0.03° for 1 sec.

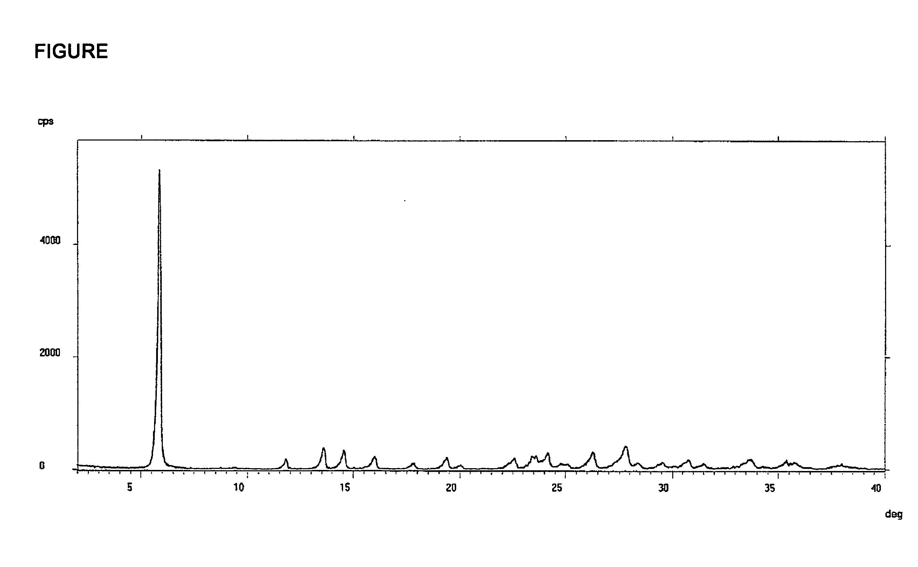

The crystalline monohydrate form of 2-carboxyphenyl-boronic acid sodium salt has an XRPD spectrum as reported in the figure.

The water content in the sample is measured according to the Karl - Fischer method.

### DETAILED DISCLOSURE OF THE INVENTION

An object of the invention is a process for the preparation of a compound of formula (I) 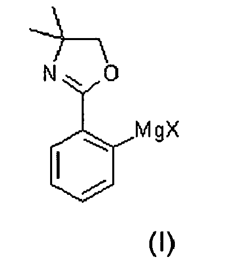 wherein X is halogen;
comprising the reaction between a compound of formula (II)

R-Mg-X (II)

wherein X is halogen, and R is a C₁-C₈ alkyl group or a C₅-C₈ cycloalkyl group;
with a compound of formula (III) 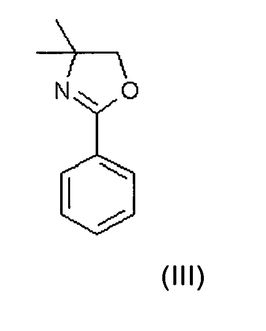 in an aprotic organic solvent.

R as C₁-C₈ alkyl group is for example a straight or branched C₃-C₆ alkyl group, in particular propyl, isopropyl, butyl, sec-butyl, tert-butyl or pentyl.

A C₅-C₈ cycloalkyl group is for example a cyclopentyl, cyclohexyl or cycloheptyl group, in particular cyclohexyl.

A halogen X is for example chlorine, bromine or iodine, preferably chlorine.

An organic aprotic solvent is for example an ether solvent, e.g. selected from diethyl ether, tert-butyl-methyl ether, dimethoxymethane, tetrahydrofuran and methyl-tetrahydrofuran; an aliphatic hydrocarbon, e.g. selected from pentane, hexane, cyclohexane; an aromatic hydrocarbon, e.g. selected from benzene, toluene, xylene; or mixture of 2, 3 or 4 of said solvents; preferably it is tetrahydrofuran.

The reaction between a compound of formula (II) and a compound of formula (III) can be carried out at a temperature ranging from room temperature to the reflux temperature of the reaction mixture, preferably from about 50°C to the reflux temperature, in particular at the reflux temperature; for a time approximately ranging from 12 to 48 hours, typically from about 15 to 20 hours.

A compound of formula (II) can be obtained for example by reaction of a compound of formula (IV)

R-X (IV)

wherein R and X are as defined above, with metal magnesium according to known methods. The compounds of formula (III) and (IV) are known.

A compound of formula (I) wherein X is chlorine is novel and is a further object of the invention.

According to a further object of the invention, a compound of formula (I) can be converted to 2-carboxybenzene-boronic acid, of formula (V), or a salt thereof, 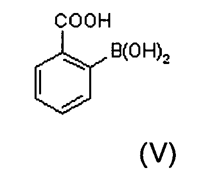 by a process comprising:
a) the reaction of compound of formula (I) 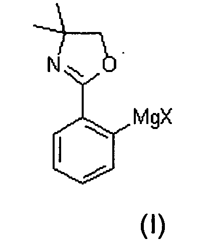 wherein X is halogen; with a compound of formula (VI)

   B(OR₁)₃ (VI)

   wherein each R₁, which can be the same or different, is C₁-C₈ alkyl, aryl, aryl-C₁-C₈ alkyl; or two of R₁, taken together, form a group - (CH₂)ₘ-V-(CH₂)ₙ-, wherein m and n, which can be the same or different, are 0 or 1, and V is NR₃ or C(R₃)₂ wherein R₃ is hydrogen, C₁-C₈ alkyl, aryl or aryl-C₁-C₈ alkyl and the remaining R₁ is as defined above;
   to obtain a compound of formula (VII) 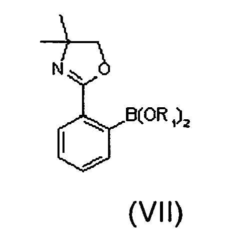 wherein each R₁, which can be the same or different, is as defined above;
b) the conversion of a compound of formula (VII) to the acid of formula (V); and, if desired, the conversion of the latter to a salt thereof.

A salt of the acid of formula (V) is for example a salt with an alkali or alkaline-earth metal, typically sodium, potassium, lithium, magnesium, calcium or barium, preferably sodium.

R₁ and R₃ as C₁-C₈ alkyl group is for example a straight or branched C₁-C₄ alkyl group, in particular independently methyl, ethyl, propyl, isopropyl or butyl.

An aryl group is for example phenyl or naphthyl, in particular phenyl.

An aryl-C₁-C₈ alkyl group is for example an aryl-C₁-C₄ alkyl group, in particular benzyl or phenylethyl.

The reaction between a compound of formula (I) and a compound of formula (VI) can be carried out according to known methods, for example as disclosed in US 2,898,365 and in WO 99/64428.

A compound of formula (I), prepared according to the process herein described, preferably is not isolated from the reaction mixture, and used as such.

The conversion of a compound of formula (VII) to the acid of formula (V) can be carried out, for example, by hydrolysis, both in neutral and basic or acid medium, in particular in a protic solvent, e.g. water, a C₁-C₆ alkanol or ammonia; or their mixture with the solvent used for preparing a compound of formula (I); preferably at the reflux temperature of the reaction mixture.

The hydrolysis of the boronic ester and the opening of the oxazole ring can occur substantially at the same time, i.e. approximately at the same time, immediately before or immediately after one another. The resulting suspension in a mixture of water and the organic solvent used for preparing compound of formula (I) contains, in particular, the acid of formula (V), 1,1-dimethyl-ethanolamine (which results from the opening of the oxazole ring of the compound of formula (VII) and magnesium salts deriving from the preceding reactions. A subsequent filtration allows to remove most of the magnesium salts. The organic solvent can then be removed according to known methods, for example by distillation under reduced pression or by phase separation. An aqueous solution containing compound of formula (V), 1,1-dimethyl-ethanolamine and by-product salts is thus obtained.

It has surprisingly been found that a carboxylate salt of the boronic acid of formula (V), contrary to the free acid, can be isolated from the reaction mixture containing 1,1-dimethyl-ethanolamine and the reaction by-product salts, to afford a product with a purity degree equal to or higher than 99.5%.

The conversion of the boronic acid of formula (V) to a carboxylate salt thereof can be carried out according to known methods; for example by adding the above reaction mixture with a base; typically an alkaline or alkaline-earth metal basic salt; e.g. sodium, potassium, calcium, barium or magnesium hydroxide, carbonate or hydrogencarbonate, either in aqueous solution or in solid form.

Optionally, before adding the base, the reaction mixture can be purified further on by removing the basic by-products through a process comprising acidifying the solution with an acid, typically a concentrated aqueous solution of a strong acid, for example hydrochloric acid, and passing through a strong or weak cation exchange resin; for example a carboxylic or sulfonic acid resin; for instance DOWN MARATHON MSC®. During this process most of basic by-products (which comprises magnesium basic salts and 1,1-dimethyl-ethanolamine) are retained by the resin. The resulting solution is then treated with a base, to provide the carboxylate salt of acid of formula (V), as described above.

A further object of the invention is therefore a process for isolating a carboxylate salt of the boronic acid of formula (V) from the reaction mixture containing by-product salts, which process comprises:
a) removal of the water from the mixture,
b) esterification of the boronic function of the salified compound of formula (V);
c) removal of by-product salts by filtration;
d) hydrolysis of the ester of the acid of formula (V) obtained at step b); and
e) recovery of the product.

Removal of the water from the mixture is preferably performed by azeotropic distillation, in particular by adding a solvent to the aqueous solution containing a carboxylate salt of the acid of formula (V) and by-product salts, which is able to form an azeotropic mixture with water, for example an aromatic hydrocarbon, in particular toluene. After water removal, the carboxylate salt of the acid of formula (V) precipitates together with the reaction salts present in the mixture.

The boronic function in the carboxylate salt of the acid of formula (V) can be esterified by heating the mixture obtained above in the presence of an alkanol, e.g. a C₁-C₆ alkanol, preferably butanol. Preferably the esterification can be completed by removing water formed during the reaction by azeotropic distillation. After completion of the esterification, the carboxylate salt of the acid of formula (V) remains in solution as the alkyl-boronic ester, while the by-products are undissolved and can be separated according to known methods, for example by filtration. The alkyl-boronic ester of formula (V) can be hydrolysed to obtain the corresponding boronic acid carboxylate salt, for example by addition of water, thereby precipitating from the solvent mixture.

The carboxylate salt of a boronic acid of formula (V) is obtained in the solid form, which makes its use, transportation and storage easier. If desired, a carboxylate salt of 2-carboxybenzene-boronic acid of formula (V) can be converted to the free 2-carboxybenzene-boronic acid according to known methods.

A carboxylate salt of a compound of formula (V) is preferably obtained as the sodium salt of formula (Va)

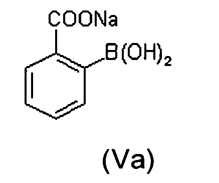

A compound of formula (Va) in the crystalline form, with a purity degree equal to or higher than 99.5%, preferably higher than 99.9%, in particular in the anhydrous or substantially mono- or di-hydrate form, is novel and is a further object of the invention.

A preferred compound of formula (Va) is its substantially monohydrate form, having water content of 26.2% and an XRPD spectrum as reported in the figure, wherein the most intense diffraction peaks fall at 5.8; 13.6; 14.5, 24.1; 26.2 and 27.8 ± 0.2° in 2θ.

A salt of 2-carboxybenzene-boronic acid of formula (V), or 2-carboxybenzene-boronic acid itself, can be used in the coupling reactions to form a C-C bond between the two benzene rings in the carboxy substituted diphenyl compounds, for example in the synthesis of telmisartan.

The following examples illustrate the invention.

### EXAMPLE 1

### 4,4-Dimethyl-2-phenyl-oxazoline magnesium chloride (I)

100 g of 4,4-dimethyl-2-phenyl-oxazoline are dropped into a 1 I reactor containing 400 g of a 1.63 M solution of cyclohexylmagnesiun chloride in tetrahydrofuran (THF) at the reflux temperature of the mixture (75°C about). During the addition, the reflux temperature raises to approximately 80°C. The mixture is kept under stirring at the reflux temperature for at least 18 hours. The resulting mixture (about 500 g), which is cooled to a temperature of about 20-25°C, contains a THF solution of 4,4-dimethyl-2-phenyl-oxazoline magnesium chloride, which is directly used in the subsequent reactions.

### EXAMPLE 2

### 2-(4,4-Dimethyl-oxazoline)-phenylboronic acid dimethyl ester (VII)

A 2 L reactor, under inert atmosphere, is loaded with 178 g of trimethylborate and 150 g of THF. The resulting solution is cooled to about 20°C and the THF solution of 4,4-dimethyl-2-phenyl-oxazoline magnesium chloride (about 500 g) prepared in Example 1 are dropped therein, keeping the temperature below 20°C. After completion of the addition, the suspension is stirred at about 20-25°C for at least 3 hours to complete the formation of 2-(4,4-dimethyl-oxazoline)-phenylboronic acid dimethyl ester. The resulting mixture is directly used in the subsequent steps.

### EXAMPLE 3

### 2-Carboxyphenyl-boronic acid monohydrate sodium salt (V)

A 2 L reactor, under inert atmosphere, is loaded with 750 ml of water, and the THF suspension of 2-(4,4-dimethyl-oxazoline)-phenylboronic acid dimethyl ester (about 828 g) from Example 2 are quickly added with stirring. The suspension is refluxed under these conditions for at least 16 hours, after which time is cooled to a temperature of approximately 30°C and the suspended salts are filtered off and washed with water. Approximately 1800 ml of final solution are obtained, which is placed again into the reactor. The THF-water-cyclohexane mixture is distilled under atmospheric pressure to reach the inner temperature of approximately 80°C. (Cyclohexane derives form the exchange reaction described in Example 1). The resulting solution (about 1200 ml) is washed twice with 200 ml of toluene, then concentrated under vacuum to remove any traces of organic solvent. The resulting clear aqueous solution is added, under stirring, with 130 g of sodium carbonate to promote the formation of the sodium salt. The mixture is heated at a temperature of about 60°C for at least 30 minutes, then cooled to a temperature of about 30-40°C and the precipitated salts are filtered off and washed with water. The resulting aqueous solution is concentrated under vacuum to a residue, keeping the inner temperature below about 80°C. The residue is diluted with 1000 ml of toluene, and the remaining water is azeotropically distilled off the reaction mixture, using a Dean-Stark apparatus. The resulting suspension is added with 200 ml of n-butanol, and azeotropic distillation is continued as long as the reaction water can be separated. The suspension is cooled to a temperature of approximately 30°C. The formed inorganic salts are filtered off and the solution is placed again into the reactor, heated to a temperature of approximately 80°C and added with 35 g of water. The resulting suspension is fluidized by heating to the reflux temperature for at least 30 minutes, then the mixture is cooled to a temperature of 15-20°C, and the solid is filtered and washed twice with 50 ml of toluene. After drying under vacuum at a temperature of 60°C, 100 g of 2-carboxyphenyl-boronic acid monohydrate sodium salt are obtained, having water content of 26.2% (Karl Fischer) and an XRPD spectrum as reported in the figure, wherein the most intense diffraction peaks fall at 5.8; 13.6; 14.5, 24.1; 26.2 and 27.8 ± 0.2° in 2θ.

### EXAMPLE 4

### 2-Carboxyphenyl-boronic acid monohydrate sodium salt (V)

A 2 L reactor, under inert atmosphere, is loaded with about 830 g of a THF suspension of 2-(4,4-dimethyl-oxazoline)-phenylboronic acid dimethyl ester obtained in Example 2. The suspension is refluxed under these conditions for at least 16 hours, after which time is cooled to a temperature of approximately 30°C. About 69 g of hydrochloric acid (37% w/w) are added to the suspension under stirring, until the solid is completely dissolved, then the THF is distilled off under vacuum and the aqueous solution is washed with toluene (2x about 200 mL). The resulting solution is concentrated under vacuum until a residual volume of about 400 mL is reached, and passed through a column charged with Dowex Marathon MSC® hydrogen form (about 2000 mL of wet ionexchange resin 1,7 eq/L) eluting the product with demineralized water. The collected acidic solution is neutralized with sodium hydroxide to pH 8-9 and water is distilled off under vacuum (internal temperature below 80°C) till a thick residue is obtained. The residue is added with toluene (about 1000 mL) and the remaining water is removed by azeotropic distillation at atmospheric pressure until the internal temperature reaches about 102-104°C. To the resulting suspension n-butanol (200 mL) is added and the azeotropic distillation is continued until the internal temperature reaches about 104-106°C. The suspension is cooled to about 30°C, filtered and the salts are washed with toluene (2x about 100 mL). The clear solution is charged again into the reactor, heated to about 80°C and added with water (35 g). The mixture is heated to the reflux temperature and maintained under these conditions for about 30 minutes, then the suspension is cooled to about 15-20°C, filtered and the solid is washed with toluene (2x about 50 mL). 100 g of the title product as wet solid are obtained after drying.

## Claims

1. A process for the preparation of a compound of formula (I) 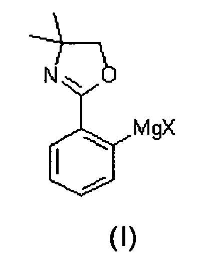 wherein X is halogen;
comprising the reaction between a compound of formula (II)
R-Mg-X (II)
wherein X is halogen, and R is a C₁-C₈ alkyl group or a C₅-C₈ cycloalkyl group;
with a compound of formula (III) 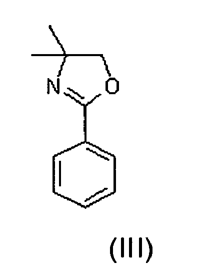 in an organic aprotic solvent.

2. The process as claimed in claim 1, wherein the solvent is an ether.

3. A compound of formula (I), as defined in claim 1, wherein X is chlorine.

4. The process as claimed in claim 1, further comprising the conversion of a compound of formula (I) to 2-carboxybenzene-boronic acid of formula (V), or a salt thereof, 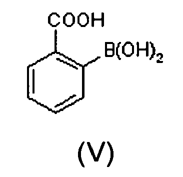 said process comprising:
a) the reaction of compound of formula (I) 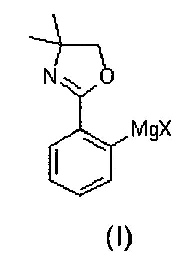 wherein X is halogen;
with a compound of formula (VI)
B(OR₁)₃ (VI)
wherein each R₁, which can be the same or different, is C₁-C₈ alkyl, aryl, aryl-C₁-C₈ alkyl; or two of R₁, taken together, form a group -(CH₂)ₘ-V-(CH₂)ₙ-, wherein m and n, which can be the same or different, are 0 or 1, and V is NR₃ or C(R₃)₂ wherein R₃ is hydrogen, C₁-C₈ alkyl, aryl or aryl-C₁-C₈ alkyl and the remaining R₁ is as defined above;
to obtain a compound of formula (VII) 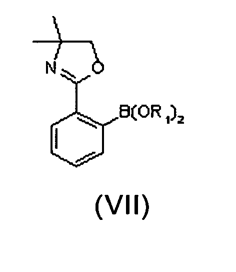 wherein each R₁, which can be the same or different, is as defined above;
b) the hydrolysis of the boronic ester and the opening of the oxazole ring in a compound of formula (VII); and, if desired, the conversion of a compound of formula (V) to a carboxylate salt thereof.

5. The process as claimed in claim 4, wherein the hydrolysis of the boronic ester and the opening of the oxazole ring in a compound of formula (VII) can be carried out approximately at the same time, immediately before or immediately after one another.

6. The process as claimed in claim 4 wherein, before converting a compound of formula (V) to a salt thereof, the reaction mixture is purified by removing the basic by-products.

7. The process as claimed in claim 4, further comprising the recovery of a carboxylate salt of the boronic acid of formula (V) from the reaction mixture, said process comprising:
a) removal of the water from the mixture,
b) esterification of the boronic function of the acid of formula (V);
c) removal of by-product salts by filtration;
d) hydrolysis of the ester of the acid of formula (V) obtained at step b); and
e) recovery of the product.

8. The process as claimed in claim 7, wherein water is removed from the mixture by azeotropical distillation.

9. The process as claimed in claim 7, wherein the esterification is completed by removing water through azeotropic distillation.

10. The process as claimed in claim 7, wherein the ester of the acid of formula (V) is hydrolyzed by addition of water to the solvent mixture.

11. The process as claimed in claim 4 or 7, wherein a carboxylate salt of the boronic acid of formula (V) is an alkali or alkaline-earth metal salt.

12. A compound of formula (Va) 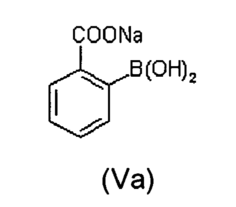 in the crystalline form.

13. A compound as claimed in claim 12, in the anhydrous or substantially mono- or di-hydrate form.
